# EUROPÄISCHE PATENTSCHRIFT

(11) **EP 3 671 152 B1**
(45) Veröffentlichungstag und Bekanntmachung des Hinweises auf die Patenterteilung: **01.12.2021**
(21) Anmeldenummer: 18214287.7
(22) Anmeldetag: 20.12.2018
(51) Int. Cl.: G01K 7/34

(54) **SYTEM ZUR ERMITTLUNG DER TEMPERATUR EINES ELASTOMERPRODUKTS**
SYSTEM TO EVALUATE THE TEMPERATURE OF AN ELASTOMER
SYSTÈME POUR EVALUER LA TEMPERATURE D'UN ELASTOMERE

(43) Veröffentlichungstag der Anmeldung: 24.06.2020
(73) Patentinhaber: ContiTech AG, 30165 Hannover (DE)
(72) Erfinder: Wietzke, Steffen, 31311 Uetze (DE); Iftode, Cora, 300243 Timisoara (RO)
(74) Vertreter: Continental Corporation

(56) Entgegenhaltungen:
- EP-A1- 1 602 906
- WO-A1-2016/065574
- WO-A2-2007/012668

## Beschreibung

Die Erfindung betrifft ein System zur Ermittlung einer Temperatur eines Elastomerprodukts.

Elastomerprodukte sind grundsätzlich aus dem Stand der Technik bekannt. Hierbei kann es sich beispielsweise um einen Gummi-Riemen, ein Gummi-Förderband oder ein GummiLager handeln. Diese Aufzählung ist nicht einschränkend zu verstehen. Grundsätzlich ist eine Vielzahl von unterschiedlichen Elastomerprodukten bekannt. Ein Elastomerprodukt weist ein erstes Elastomermaterial auf. Das erste Elastomermaterial kann von einem Gummi-Material gebildet sein. Für ein Elastomerprodukt ist oftmals ein Temperaturbereich vorbestimmt, der mögliche Temperaturen für das erste Elastomermaterial des Elastomerprodukts bestimmt. Um das erste Elastomermaterial des Elastomerprodukts nicht zu zerstören und/oder die zugehörigen Eigenschaften nicht negativ zu beeinflussen, sollte die Temperatur des ersten Elastomermaterials nicht außerhalb des zuvor genannten, vorbestimmten Temperaturbereichs sein.

Elektrische Temperaturmesssensoren sind grundsätzlich aus dem Stand der Technik bekannt. Diese Sensoren weisen jedoch den Nachteil auf, dass sie oftmals eine hohe Biegesteifigkeit aufweisen und darüber hinaus über elektrische Leitungsverbindungen mit einer Auswerteschaltung verbunden sein müssen, um die Temperatur im Umfeld des Temperatursensors zu erfassen. Wird ein derartiger Sensor beispielsweise an der Außenseite eines Gummi-Riemens eines Riementriebs befestigt, so wäre es praktisch kaum möglich, die elektrische Leitungsverbindung zwischen dem Sensor und der Auswerteschaltung während des Betriebs des Riementriebs aufrechtzuerhalten.

Aus dem Stand der Technik sind außerdem Vorrichtungen zur berührungslosen Temperaturmessung bekannt. So ist beispielsweise eine Temperaturmessvorrichtung bekannt, die zum Aussenden und Empfangen eines Infrarotlichtsignals ausgebildet ist und dazu konfiguriert ist, die Temperatur eines Objekts basierend auf dem ausgesendeten Lichtstrahl und dem vom Objekt reflektierten und danach empfangenen Lichtsignal zu ermitteln. Elastomerprodukte werden in der Praxis nicht selten in Umgebungen eingesetzt, die einer hohen Staubbelastung ausgesetzt sind. Staub und/oder Abrieb auf einem Gummiprodukt würde deshalb die Messung der Temperatur des Gummiprodukts mittels der zuvor genannten Temperaturmessvorrichtung verfälschen.

EP1602906 offenbart ein System zur Ermittlung einer Temperatur eines Elastomerprodukts.

Der Erfindung liegt deshalb die Aufgabe zugrunde, ein System bereitzustellen, das eine berührungslose und störgrößenrobuste Erfassung einer Kerntemperatur eines Elastomerprodukts erlaubt.

Gelöst wird die Aufgabe durch ein System mit den Merkmalen des Anspruchs 1. Vorgesehen ist deshalb ein System zur Ermittlung einer Temperatur eines Elastomerprodukts. Das System weist ein Elastomerprodukt mit einem ersten Elastomermaterial und einem in das erste Elastomermaterial eingebetteten Elastomerresonator auf. Außerdem weist das System einen Transceiver und eine Auswerteeinheit auf, die mit dem Transceiver gekoppelt ist. Der Elastomerresonator ist von einem Streifen aus einem zweiten, elektrisch leitfähigen Elastomermaterial gebildet. Der Transceiver ist zur Erzeugung eines elektromagnetischen Wechselfelds ausgebildet. Der Elastomerresonator ist ausgebildet, in das Wechselfeld angekoppelt zu werden, sodass der Elastomerresonator mit dem Wechselfeld in Wechselwirkung ist. Der Elastomerresonator ist außerdem ausgebildet, eine Veränderung des Wechselfelds in Abhängigkeit einer Temperatur des Elastomerresonators zu bewirken. Der Transceiver ist zur Erfassung des Wechselfelds und zur Erzeugung eines Messsignals ausgebildet, das das Wechselfeld und /oder die Veränderung des Wechselfelds repräsentiert. Die Auswerteeinheit ist zur Ermittlung der Temperatur des Elastomerprodukts basierend auf dem Messsignal ausgebildet.

Wie bereits eingangs erläutert, sind Elastomerprodukte grundsätzlich aus dem Stand der Technik bekannt. Das Elastomerprodukt des Systems weist ein erstes Elastomermaterial auf. Dabei ist es nicht zwingend notwendig, dass das Elastomerprodukt ausschließlich das erste Elastomermaterial aufweist. So kann es beispielsweise vorgesehen sein, dass Festigkeitsträger und/oder andere Elemente in das erste Elastomermaterial des Elastomerprodukts eingebettet sind. Darüber hinaus weist das Elastomerprodukt einen Elastomerresonator auf. Der Elastomerresonator ist ein Resonator, der von einem Streifen aus einem zweiten, elektrisch leitfähigen Elastomermaterial gebildet ist. Dieser Resonator wird also als Elastomerresonator bezeichnet. Vorzugsweise weist das zweite, elektrisch leitfähige Elastomermaterial einen spezifischen Widerstand von weniger als 10000 Ω*m, weniger als 2000 Ω*m oder weniger als 1000 Ω*m auf. Vorzugweise besteht der Elastomerresonator ausschließlich aus dem zweiten, elektrisch leitfähigen Elastomermaterial. Das zweite, elektrisch leitfähige Elastomermaterial kann auf einem Elastomermaterial basieren, in das elektrisch leitfähige Partikel und/oder elektrisch leitfähige Füllstoffe eingebettet und/oder eingemischt sind. Die elektrisch leitfähigen Partikel bzw. Füllstoffe können beispielsweise aus der Gruppe von Rußpartikeln, Kohlenstoffpartikeln, Kohlenstoffnanoröhrchen, Graphenpartikeln, Graphitpartikeln, und/oder Metallpartikeln sein. Die elektrische Leitfähigkeit des zweiten, elektrisch leitfähigen Elastomermaterials kann jedoch auch durch einen anderen Füllstoff und/oder durch eine ionische Flüssigkeit, die in das entsprechende Elastomermaterial eingemischt und/oder eingebettet ist, gebildet sein.

Der Elastomerresonator ist in das erste Elastomermaterial des Elastomerprodukts eingebettet. Somit kann der Elastomerresonator vollständig von dem Elastomermaterial umgeben sein. Besonders bevorzugt besteht zwischen dem Elastomerresonator und dem Elastomerresonator umgebenden Teil des ersten Elastomermaterials ein vollflächiger und/oder umfänglich geschlossener Kontakt. Dies bietet den Vorteil, dass das erste Elastomermaterial und der Elastomerresonator zumindest im Wesentlichen die gleiche Temperatur aufweisen können. Dies gilt insbesondere in einem Temperatur-Gleichgewichtszustand. Außerdem kann der Elastomerresonator mit dem Elastomerresonator zumindest temporär verformt werden, ohne dass dies zu einer Zerstörung des Elastomerresonators oder des umgebenden Materials führt. Der Elastomerresonator ist deshalb besonders robust gegenüber äußeren mechanischen Einwirkungen.

Das System weist außerdem einen Transceiver auf. Der Transceiver ist vorzugsweise zum Erzeugen und Senden einer elektromagnetischen Welle und zum Empfangen einer elektromagnetischen Welle ausgebildet. Mit der Erzeugung der elektromagnetischen Welle ist der Transceiver vorzugsweise auch zur Erzeugung eines elektromagnetischen Wechselfelds ausgebildet. Der Transceiver kann eine Signalerzeugungs- und Empfangseinheit sowie eine damit gekoppelte Antenne aufweisen. Die Antenne kann als Dipolantenne ausgebildet sein. Für das System ist es deshalb vorgesehen, dass der Transceiver zur Erzeugung eines elektromagnetischen Wechselfelds ausgebildet ist. Die Frequenz, die Signalstärke und/oder die Bandbreite des elektromagnetischen Wechselfelds kann bzw. können vorbestimmt sein. So kann der Transceiver beispielsweise zur Erzeugung eines elektromagnetischen Wechselfelds mit einer vorbestimmten Signalstärke innerhalb eines vorbestimmten Frequenzbandes ausgebildet sein. Die mittlere Frequenz des aus dem Frequenzband kann beispielsweise 100 MHz sein.

Wie zuvor erläutert, weist der Elastomerresonator die Eigenschaften eines Resonators auf. Der Elastomerresonator kann somit auch kurz als Resonator bezeichnet sein. Der Elastomerresonator kann durch die Form eines Streifens und/oder durch eine vorbestimmte Wahl von Stoffeigenschaften des zweiten Elastomermaterials ausgebildet sein, auf zumindest einer vorbestimmten Frequenz bei einer breitbandigen Anregung in einem elektromagnetischen Wechselfeld, das zumindest einen Frequenzanteil umfasst, der zu der zuvor genannten, mindestens einen vorbestimmten Frequenz korrespondiert, zu schwingen. Die vorbestimmte Frequenz ist vorzugsweise die Eigenfrequenz der Elastomerresonators. Vorzugsweise ist das von dem Transceiver erzeugbare, elektromagnetische Wechselfeld und die mindestens eine, vorbestimmte Eigenfrequenz des Elastomerresonators derart ausgebildet und/oder aufeinander abgestimmt, dass der Elastomerresonator in das Wechselfeld eingekoppelt werden kann, sodass der Elastomerresonator mit dem Wechselfeld in Wechselwirkung ist, insbesondere indem der Elastomerresonator mit der mindestens einen Eigenfrequenz aufgrund der Anregung durch das Wechselfeld schwingt. In der Praxis wurde festgestellt, dass die Eigenfrequenz des Elastomerresonators von der Temperatur des Elastomerresonators abhängt. Der Elastomerresonator ist deshalb auch dazu ausgebildet, eine Veränderung des Wechselfelds in Abhängigkeit einer Temperatur des Elastomerresonators zu bewirken. Eine Temperaturveränderung des Elastomerresonators kann also zu einer entsprechenden Veränderung des Wechselfelds führen. Daraus folgt wiederum, dass die Einkopplung des Elastomerresonators mit der mindestens einen, entsprechend veränderten Eigenfrequenz auch zu einer veränderten Wechselwirkung mit dem Wechselfeld führt. Aus dem Spektrum des Wechselfelds kann die mindestens eine Eigenfrequenz des Elastomerresonators aufgrund der entsprechenden Resonanz, die in dem jeweiligen Frequenzanteil des Wechselfelds auftritt, abgelesen und/oder ermittelt werden. Verändert sich die mindestens eine Eigenfrequenz des Elastomerresonators, kann aus dem mit dem Elastomerresonator wechselwirkenden Elastomerresonator eine entsprechende Veränderung der mindestens einen Resonanzfrequenz ablesen und/oder ermitteln. In der Praxis wurde festgestellt, dass sich die elektrisch leitfähige Eigenschaft des Gummiresonators vorteilhaft auf die Größe der Veränderung der Eigenfrequenz in Abhängigkeit der Temperatur des Gummiresonators auswirkt. Umso größer die Änderung der Leitfähigkeit des zweiten Elastomermaterials des Gummiresonators ist, desto größer kann die Veränderung der mindestens einen Eigenfrequenz des Gummiresonators bei einer vorbestimmten Änderung der Temperatur des Gummiresonators sein.

Der Transceiver ist außerdem zur Erfassung des Wechselfelds ausgebildet. Hierbei handelt es sich vorzugsweise um das veränderte Wechselfeld. Außerdem ist der Transceiver zur Erzeugung eines Messsignals ausgebildet, dass das Wechselfeld (bzw. das veränderte Wechselfeld) und/oder die Veränderung des Wechselfelds repräsentiert. In dem das Messsignal das zuvor genannte Wechselfeld bzw. die Veränderung des Wechselfelds repräsentiert, kann anhand des Messsignals beispielsweise festgestellt werden, um welchen Wert sich eine Resonanzfrequenz im Spektrum des veränderten Wechselfelds verschoben hat und/oder welchen Wert die entsprechende Resonanzfrequenz aufweist. In der Praxis wurde außerdem festgestellt, dass anhand der Verschiebung der Resonanzfrequenz und/oder anhand des Wertes der Resonanzfrequenz auf die Temperatur des Elastomerresonators geschlossen werden kann. Die Auswerteeinheit ist deshalb zur Ermittlung der Temperatur des Elastomerprodukts basierend auf dem Messsignal ausgebildet. Die Auswerteeinheit kann ausgebildet sein, die zuvor erläuterte Auswertung auszuführen. Von der Auswerteeinheit kann eine Referenztabelle und/oder eine Referenzfunktion gespeichert sein, die die Temperatur des Elastomerprodukts in Abhängigkeit einer aus dem Messsignal ermittelbaren Resonanzfrequenz repräsentiert. Die Auswerteeinheit kann ausgebildet sein, die Ermittlung der Temperatur des Elastomerprodukts anhand der Referenztabelle und/oder der Referenzfunktion auszuführen. Darüber hinaus kann von der Auswerteeinheit ein funktionaler Zusammenhang zwischen der Temperatur des Elastomerresonators und dem übrigen Teil des Elastomerprodukts, insbesondere des zugehörigen, ersten Elastomermaterials, hinterlegt sein. Unter Berücksichtigung der der Referenztabelle und/oder der Referenzfunktion sowie vorzugsweise unter Berücksichtigung des zuvor genannten Zusammenhangs kann die Auswerteeinheit entsprechend ausgebildet sein, um basierend auf dem Messsignal die Temperatur des Elastomerresonators und/oder die Temperatur des Elastomerprodukts zu ermitteln. Die Referenzfunktion kann vorzugsweise lineare und bzw. oder nicht-lineare Zusammenhänge aufweisen bzw. berücksichtigen.

Der Elastomerresonator ist in das erste Elastomermaterial des Gummiprodukts eingebettet. Somit kann die von der Auswerteeinheit ermittelte Temperatur die Kerntemperatur des Elastomerprodukts repräsentieren. Die Ermittlung der Temperatur des Gummiprodukts ist darüber hinaus besonders störgrößenrobust. Denn selbst wenn das Gummiprodukt außenseitig mit Staub und/oder Abrieb bedeckt sein sollte, so beeinflusst dies nicht die Temperatur des Elastomerresonators und somit auch nicht die mindestens eine Eigenfrequenz des Elastomerresonators. Darüber hinaus erfolgt die Ermittlung der Temperatur des Elastomerprodukts kontaktlos. Denn der Receiver kann beabstandet zu dem Elastomerprodukt angeordnet sein, vorzugsweise derart, dass eine Wechselwirkung zwischen dem erzeugbaren, elektromagnetischen Wechselfeld und dem Elastomerresonator entsteht. Aufgrund des Abstands des Transceivers zu dem Elastomerprodukt beeinflusst der Transceiver jedoch die Temperatur des Elastomerprodukts nicht. Darüber hinaus kann das Elastomerprodukt unabhängig vom Transceiver bewegt werden, was eine vielfältige Einsatzmöglichkeit des Elastomerprodukts gewährleistet.

Eine vorteilhafte Ausgestaltung des Systems zeichnet sich dadurch aus, dass der Elastomerresonator zumindest im Wesentlichen mittig im ersten Elastomermaterial angeordnet ist. Dies bietet den Vorteil, dass mittels des derart angeordneten Elastomerresonators besonders präzise auf die Kerntemperatur des Elastomerprodukts bzw. die Kemtemperatur des zugehörigen ersten Elastomermaterials geschlossen werden kann. Besonders bevorzugt ist der erste Elastomerresonator zumindest im Wesentlichen mittig in dem Elastomerprodukt angeordnet. Weist das Elastomerprodukt neben dem ersten Elastomermaterial auch weitere Komponenten auf, so kann die mittige Anordnung im Elastomerprodukt eine besonders vorteilhafte Ermittlung der Kerntemperatur des Elastomerprodukts erlauben.

Eine weitere vorteilhafte Ausgestaltung des Systems zeichnet sich dadurch aus, dass von der Auswerteeinheit eine Referenzfrequenz gespeichert ist, wobei die Auswerteeinheit ausgebildet ist, eine Resonanzfrequenz des Wechselfelds basierend auf dem Messsignal zu ermitteln, und wobei die Auswerteeinheit ausgebildet ist, die Temperatur des Elastomerprodukts basierend oder außerdem basierend auf der Referenzfrequenz und der Resonanzfrequenz zu ermitteln. Da die Resonanzfrequenz des Wechselfelds aus dem Messsignal ermittelbar ist, kann die Auswerteeinheit auch derart ausgebildet sein, die Temperatur des Elastomerprodukts durch die Resonanzfrequenz basierend auf dem Messsignal und der Referenzfrequenz zu ermitteln. Die Referenzfrequenz kann einen Referenzwert für die Resonanzfrequenz repräsentieren. Wird die Temperatur des Elastomerprodukts basierend auf der Referenzfrequenz und der Resonanzfrequenz mittels der Auswerteeinheit ermittelt, so kann beispielsweise eine Differenz und/oder ein Verhältnis zwischen der Referenzfrequenz und der Resonanzfrequenz zur Ermittlung der Temperatur des Elastomerprodukts berücksichtigt werden. Die Resonanzfrequenz des Wechselfelds kann beispielsweise durch die Frequenz in einem Frequenzspektrum des Wechselfelds repräsentiert sein, wobei die Amplitude der genannten Frequenz größer als die Amplituden der benachbarten Frequenzen im Frequenzspektrum des Wechselfelds ist.

Eine weitere vorteilhafte Ausgestaltung des Systems zeichnet sich dadurch aus, dass von der Auswerteeinheit Referenzdaten gespeichert sind, die ein Referenzwechselfeld repräsentieren, und wobei die Auswerteeinheit ausgebildet ist, eine Dämpfung des Wechselfelds in Bezug auf das Referenzwechselfeld basierend auf dem Messsignal und den Referenzdaten zu ermitteln, und wobei die Auswerteeinheit ausgebildet ist, die Temperatur des Elastomerprodukts basierend oder außerdem basierend auf der Dämpfung zu ermitteln. Die Dämpfung des Wechselfelds in Bezug auf das Referenzwechselfeld kann sich dabei auf eine vorbestimmte Frequenz, beispielsweise die Resonanzfrequenz oder die Referenzfrequenz, beziehen. Ist die Amplitude des Wechselfelds bei der vorbestimmten Frequenz kleiner als die entsprechende Amplitude der vorbestimmten Frequenz des Referenzwechselfelds, so kann aus dem Verhältnis der beiden Amplituden die Dämpfung des Wechselfelds bei der vorbestimmten Frequenz ermittelt werden. Hierzu ist die Auswerteeinheit bevorzugt ausgebildet. Die Auswerteeinheit kann somit ausgebildet sein, die Temperatur des Elastomerprodukts ausschließlich basierend oder außerdem basierend auf der ermittelten Dämpfung zu ermitteln. Die Berücksichtigung der Dämpfung und/oder die ausschließliche Verwendung der Dämpfung zur Ermittlung der Temperatur hat in der Praxis gezeigt, dass die Temperatur des Elastomerresonators und somit auch die Temperatur des Elastomerprodukts besonders präzise ermittelt werden kann.

Eine weitere vorteilhafte Ausgestaltung des Systems zeichnet sich dadurch aus, dass die Auswerteeinheit zur Ermittlung einer Frequenzbandbreite des Wechselfelds basierend auf dem Messsignal ausgebildet ist, und wobei die Auswerteeinheit außerdem ausgebildet ist, die Temperatur des Elastomerprodukts basierend oder außerdem basierend auf der Frequenzbandbreite des Wechselfelds zu ermitteln. Die Frequenzbandbreite kann auch als Bandbreite bezeichnet sein. Die Frequenzbandbreite repräsentiert vorzugsweise die Breite des Intervalls des Frequenzspektrums des Wechselfelds. Durch die Wechselwirkung des Wechselfelds mit dem Elastomerresonator kann es zu einer Verschiebung, Verkleinerung und/oder Vergrößerung der Frequenzbandbreite des entsprechend veränderten Wechselfelds kommen. Dies wiederum ist abhängig von der Temperatur des Elastomerresonators. Die Berücksichtigung der Frequenzbandbreite bei der Ermittlung der Temperatur des Elastomerresonators und/oder der Temperatur des Elastomerprodukts bietet deshalb den Vorteil, dass die Temperatur des Elastomerresonators bzw. des Elastomerprodukts besonders präzise erfolgen kann. Somit kann die Auswerteeinheit ausgebildet sind, die Temperatur des Elastomerprodukts ausschließlich basierend oder außerdem basierend auf der Frequenzbandbreite des Wechselfelds zu ermitteln. Mit der Frequenzbandbreite des Wechselfelds ist vorzugsweise die Frequenzbandbreite des veränderten Wechselfelds gemeint.

Eine weitere vorteilhafte Ausgestaltung des Systems zeichnet sich dadurch aus, dass das erste Elastomermaterial elektrisch isolierend ausgebildet ist. Das erste Elastomermaterial kann beispielsweise einen spezifischen Widerstand von mindestens 10¹⁴ Ω*cm aufweisen. Die Änderung der Permittivität der Umgebung kann einen Einfluss auf die Resonanzfrequenz bzw. auf dessen Verschiebung) haben. Dies stellt eine weitere Möglichkeit der Temperaturmessung dar bzw. kann die Temperaturmessung verstärken. Dabei verschieben beide Temperaturabhängigkeiten, d.h. die Permittivität der Umgebung und die Leitfähigkeit des Resonators, die Resonanzfrequenz in dieselbe Richtung. Vorzugsweise sollte dabei die Permittivität der Umgebung ausreichend unterschiedlich von der Permitivität des Resonators sein, was üblicherweise durch die leitfähige Modifikation des Resonators i.d.R. automatisch der Fall ist. Die elektrisch isolierende Ausgestaltung des ersten Elastomermaterials erlaubt deshalb eine besonders präzise Ermittlung der Temperatur des Elastomerprodukts.

Eine weitere vorteilhafte Ausgestaltung des Systems zeichnet sich dadurch aus, dass das erste Elastomermaterial als ein erstes Gummimaterial ausgebildet ist. Das erste Elastomermaterial kann in diesem Fall auch als das erste Gummimaterial bezeichnet sein. Außerdem kann in diesem Fall das Elastomerprodukt als Gummiprodukt bezeichnet sein.

Der Gummiresonator kann beispielsweise aus einem EPDM (NORDEL IP 4725P), gefüllt mit 6 wt% CNTs (MWCNTs NC7000 von Nanocyl), bestehen. Der als Streifen ausgestaltet Elastomerresonator kann beispielsweise die Abmessungen 170 mm x 10 mm x 2 mm aufweisen. Das Elastomerprodukt kann beispielsweise die Abmessungen 180 mm x 80 mm x 6 mm aufweisen. Das erste Elastomermaterial kann beispielsweise ein Chloroprengummi sein.

Eine weitere vorteilhafte Ausgestaltung des Systems zeichnet sich dadurch aus, dass der Elastomerresonator rein passiv ausgebildet ist. Der Elastomerresonator weist somit beispielsweise keine aktiven Bauteile, insbesondere keine aktiven, elektrischen Bauteile, auf. Vielmehr kann der Elastomerresonator ausschließlich von dem zweiten Elastomermaterial gebildet sein. Damit kann der Elastomerresonator besonders vorteilhaft in das erste Elastomermaterial des Elastomerprodukts eingebettet sein, ohne die mechanischen Eigenschaften des Gummiprodukts wesentlich zu beeinflussen. Denn sowohl das erste Elastomermaterial als auch der Elastomerresonator in dieser vorteilhaften Ausgestaltung können jeweils formfeste, aber elastisch verformbare Teile des Elastomerprodukts bilden. Eine vorteilhafte Ausgestaltung des Systems zeichnet sich dadurch aus, dass das System einen Metallresonator aufweist, der an einer Außenseite des Elastomerprodukts angeordnet ist, so dass der Metallresonator und der Elastomerresonator kontaktfrei zueinander angeordnet sind, wobei der Metallresonator zur Einkopplung in das Wechselfeld und zur Übertragung des Wechselfelds zu dem Elastomerresonator ausgebildet ist. Der Metallresonator kann insbesondere zur Bündelung des Wechselfelds ausgebildet sein, so dass das mit dem Elastomerresonator in Wechselwirkung bringbare Wechselfeld besonders stark auf Änderungen eine Änderung der Temperatur des Elastomerresonator reagiert. Insbesondere kann die Wahl des Metalls des Metallresonators und/oder die Form des Metallresonators zur Bündelung des Wechselfelds in Richtung des Elastomerresonators ausgebildet sein. Außerdem kann der Metallresonator zur Ausrichtung des Wechselfelds auf den Elastomerresonator ausgebildet sein. Der Metallresonator kann auch zur Verstärkung des Wechselfelds ausgebildet sein. Der Metallresonator kann ein beliebiges leitfähiges Material und auch eine aufgedruckte leitfähige Paste aufweisen.

Eine weitere vorteilhafte Ausgestaltung des Systems zeichnet sich dadurch aus, dass das System eine mit der Auswerteeinheit gekoppelte Signalschnittstelle zur Übertragung eines Temperatursignals aufweist, das die von der Auswerteeinheit ermittelbare Temperatur des Gummiprodukts repräsentiert. Die Signalschnittstelle kann einen Teil der Auswerteeinheit bilden. Die Signalschnittstelle kann alternativ aber auch über eine Signalleitung, insbesondere eine kabelgebundene Signalleitung, mit der Auswerteeinheit gekoppelt sein. Das Temperatursignal kann von der Auswerteeinheit derart generiert sein, dass das Temperatursignal die ermittelte Temperatur des Elastomerprodukts repräsentiert. Mittels der Signalschnittstelle kann das Temperatursignal an eine weitere Einheit gesendet werden, die nicht Teil des Systems ist. So kann das Temperatursignal beispielsweise an eine Steuereinheit gesendet werden, die zur direkten und/oder indirekten Steuerung einer Bewegung des Elastomerprodukts dient. Die Steuereinheit kann eine Steuerung des Elastomerprodukts anhand der Temperatur ausführen, insbesondere die Bewegung des Elastomerprodukts unterbrechen, wenn die Temperatur des Elastomerprodukts höher als eine vorbestimmte Grenztemperatur ist.

Eine weitere vorteilhafte Ausgestaltung des Systems zeichnet sich dadurch aus, dass das Elastomerprodukt ein Reifen, eine Luftfeder, ein Gummilager, ein Förderband, ein Riemen oder ein Schlauch ist.

Weitere Merkmale, Vorteile und/oder Anwendungsmöglichkeit der vorliegenden Erfindung ergeben sich aus der nachfolgenden Beschreibung der Ausführungsbeispiele und/oder den Figuren. Dabei bilden alle beschriebenen und/oder bildlich dargestellten Merkmale für sich und/oder in einer beliebigen Kombination den Gegenstand der Erfindung auch unabhängig von ihrer Zusammensetzung in den einzelnen Ansprüchen und/oder deren Rückbezügen. In den Figuren stehen weiterhin gleiche Bezugszeichen für gleiche oder ähnliche Objekte.
- Figur 1: zeigt eine vorteilhafte Ausgestaltung des Systems in einer schematischen Ansicht.
- Figur 2: zeigt eine weitere vorteilhafte Ausgestaltung des Systems in einer schematischen Ansicht.
- Figur 3: zeigt eine vorteilhafte Ausgestaltung eines Punktdiagramms.

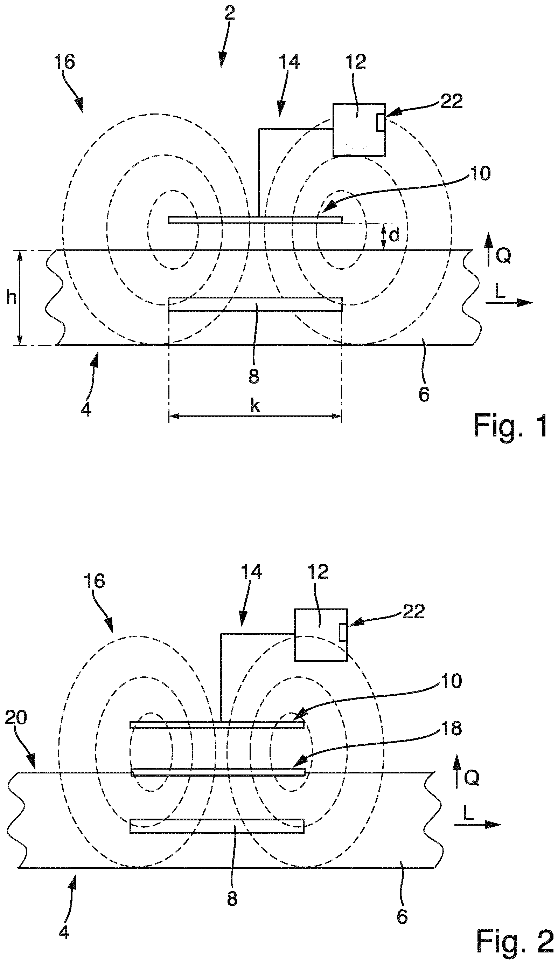

In der Figur 1 ist eine vorteilhafte Ausgestaltung des Systems 2 schematisch dargestellt. Das System 2 weist ein Elastomerprodukt 4, einen Transceiver 10 und eine Auswerteeinheit 12 auf. Vorzugsweise ist der Transceiver 10 über eine Signalleitung 14 mit der Auswerteeinheit 12 gekoppelt. Der Transceiver 10 ist außerdem bevorzugt in einem Abstand (d) zu dem Elastomerprodukt 4 angeordnet, so dass der Transceiver 10 das Elastomerprodukt 4 nicht berührt. Mit anderen Worten kann der Transceiver 10 berührungsfrei zu dem Elastomerprodukt 4 angeordnet sein.

Das Elastomerprodukt 4 weist ein erstes Elastomermaterial 6 auf, in das ein Elastomerresonator 8 eingebettet ist. Bei dem ersten Elastomermaterial 6 handelt es sich vorzugsweise um ein erstes Gummimaterial. Außerdem ist das erste Elastomermaterial 6 vorzugsweise elektrisch isolierend ausgebildet. Der Elastomerresonator 8 ist vollständig von einem zweiten, elektrisch leitfähigen Elastomermaterial gebildet. Hierbei handelt es sich um ein elektrisch leitfähiges, zweites Gummimaterial. Außerdem ist es vorgesehen, dass der Elastomerresonator 8 zumindest im Wesentlichen mittig in dem ersten Elastomermaterial 6 des Elastomerprodukts 4 eingebettet und/oder angeordnet ist. Das Elastomerprodukt 4 weist beispielsweise eine Höhe (h) auf, wobei sich die Höhe (h) in Höhenrichtung (Q) erstreckt. Vorzugsweise ist der Elastomerresonator 8 mittig zwischen den beiden in der Höhenrichtung (Q) gegenüberliegenden Außenseiten angeordnet. Dadurch kann besonders einfach gewährleistet werden, dass der Elastomerresonator 8 vollständig von dem ersten Elastomermaterial 6 des ersten Elastomerprodukts 4 umgeben ist. Die Außenfläche des Elastomerresonators 8 ist vorzugsweise vollständig in Kontakt mit dem ersten Elastomermaterial 6. Dadurch kann besonderes effektiv gewährleistet werden, dass eine Temperatur des Elastomerresonators 8 der Temperatur des ersten Elastomermaterials 6, insbesondere der Kerntemperatur des ersten Elastomermaterials 6, entspricht. Die Temperatur des Elastomerresonators 8 kann deshalb auch als die Temperatur, insbesondere die Kerntemperatur, des Elastomerprodukts 4 aufgefasst werden.

Wie aus der Figur 1 schematisch zu erkennen ist, ist der Elastomerresonator 8 von einem Streifen aus dem zweiten, elektrisch leitfähigen Elastomermaterial 6 gebildet. So kann der Elastomerresonator 8 beispielsweise eine Länge (k) in Längsrichtung (L) des Elastomerprodukts 4 aufweisen. Durch die geometrische Erstreckung des Elastomerresonator 8, insbesondere als Streifen mit einer Länge (k), und/oder durch das zweite, elektrisch leitfähige Elastomermaterial kann mindestens eine Eigenfrequenz des Elastomerresonators 8 vorbestimmt sein. Die Eigenfrequenz kann beispielsweise auf der Länge (k) des Elastomerresonators 8 basieren. Bei einer Temperaturänderung des Elastomerresonators 8 kann es zu einer Dehnung des Elastomerresonators 8 und/oder zu einer anderen physikalischen Änderung des zweiten, elektrisch leitfähigen Elastomermaterials des Elastomerresonators 8 kommen. So kann sich beispielsweise die Permittivität des zweiten, elektrisch leitfähigen Elastomermaterials in Abhängigkeit von der Temperatur des Elastomerresonators 8 ändern. Die Permittivität des Materials kann Einfluss auf die Eigenfrequenz des Elastomerresonators 8 haben.

Der Transceiver 10 des Systems 2 ist zur Erzeugung eines elektromagnetischen Wechselfelds 16 ausgebildet. Dieses ist durch entsprechende, gestrichelte Linien in der Figur 1 angedeutet. Der Elastomerresonator 8 ist ausgebildet, in das Wechselfeld 16 eingekoppelt zu werden, so dass der Elastomerresonator 8 mit dem Wechselfeld 16 in Wechselwirkung ist. So kann der Elastomerresonator 8 beispielsweise derart ausgebildet sein, dass eine Eigenfrequenz des Elastomerresonators 8 innerhalb eines Frequenzbandes des von dem Transceiver 10 erzeugbaren elektromagnetischen Wechselfelds 16 ist. Wird der Elastomerresonator 8 in das Wechselfeld 16 gebracht, so koppelt der Elastomerresonator 8 in das Wechselfeld 16 ein, was zu einer Wechselwirkung des Elastomerresonators 8 mit dem Wechselfeld 16 führt. Denn durch die entsprechende Frequenzkomponente aus dem Wechselfeld 16 wird Elastomerresonator 8 zu einer Schwingung angeregt. Diese Schwingung kann auch als Resonanzschwingung bezeichnet sein. Deshalb ist der Elastomerresonator 8 auch dazu ausgebildet, eine Veränderung des Wechselfelds 16 in der Abhängigkeit der Temperatur des Elastomerresonators 8 zu bewirken. Wie bereits zuvor erläutert, kann die Eigenfrequenz des Elastomerresonators 8 von der Temperatur des Elastomerresonators 8 abhängen. Entsprechend ändert sich auch die Veränderung des Wechselfelds 16 mittels des Elastomerresonators 8 bei einer Änderung der Temperatur des Elastomerresonators 8.

Der Transceiver 10 ist außerdem zur Erfassung des Wechselfelds 16 bzw. des veränderten Wechselfelds 16 ausgebildet. Außerdem ist der Transceiver 10 zur Erzeugung eines Messsignals ausgebildet, das das Wechselfeld 16 bzw. das veränderte Wechselfeld 16 und/oder die Veränderung des Wechselfelds 16 repräsentiert. Dieses Messsignal kann mittels der Signalleitung 14 an die Auswerteeinheit 12 übertragen werden. Die Auswerteeinheit 12 ist zur Ermittlung der Temperatur des Elastomerprodukts 4 basierend auf dem Messsignal ausgebildet. So kann die Auswerteeinheit 12 beispielsweise zunächst die Temperatur des Elastomerresonators 8 basierend auf dem Messsignal ermitteln, wenn das Messsignal das Wechselfeld 16 und/oder die Veränderung des Wechselfelds 16 repräsentiert. Darüber hinaus kann von der Auswerteeinheit 12 ein Faktor gespeichert sein, der zur Bestimmung der Temperaturen des Elastomerprodukts 4 in Abhängigkeit der ermittelten Temperatur des Elastomerresonators 8 ausgebildet und/oder geeignet ist. Deshalb ist es grundsätzlich auch möglich, dass die Auswerteeinheit 12 die zuvor genannten Schritte in einem gemeinsamen Schritt ausführt. Deshalb kann die Auswerteeinheit 12 die Temperatur des Elastomerprodukts 4 auch basierend auf dem Messsignal und/oder einer auf dem Messsignal basierenden Größe ermitteln. So ist es beispielsweise möglich, dass die Auswerteeinheit 12 dazu ausgebildet ist, basierend auf dem Messsignal einen abgeleiteten Wert zu bestimmen, der sodann zur Ermittlung der Temperatur des Elastomerprodukts von der Auswerteeinheit 12 verwendet wird.

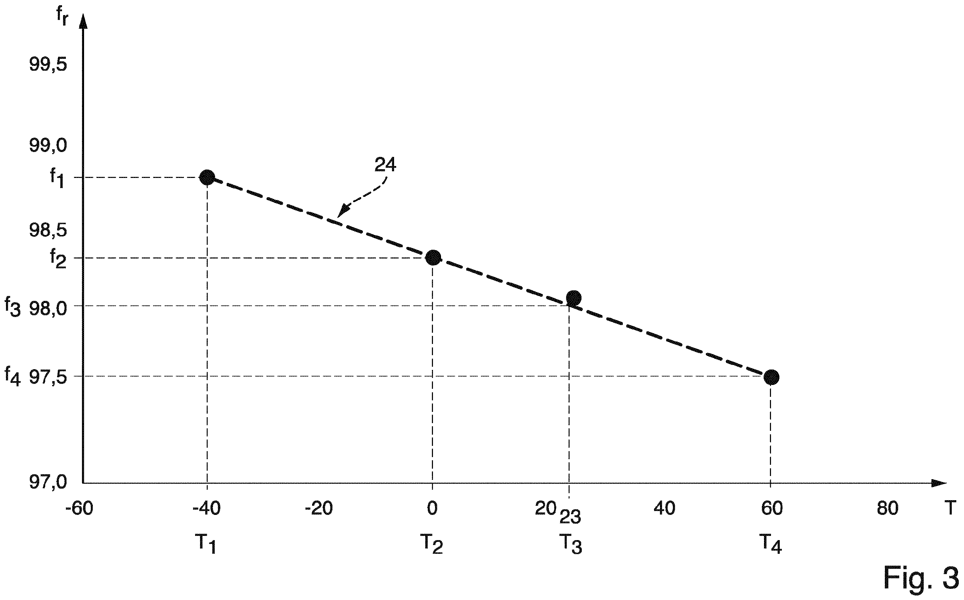

In der Figur 3 ist ein Punktdiagramm mit mehreren Messpunkten dargestellt, wobei jeder der Messpunkte eine Resonanzfrequenz (fr) für eine Temperatur (T) wiedergibt. Bei der Temperatur (T) handelt es sich um die Temperatur des Elastomerresonators 8. Zu den vier Messpunkten wurden jeweils die zugehörige Temperatur T1, T2, T3, T4 des Elastomerresonators 8 erfasst. Außerdem wurde für jeden Messpunkt die zugehörige Resonanzfrequenz f1, f2, f3, f4 aus dem von dem Transceiver 10 erfassten Wechselfeld 16 erfasst, die zu der jeweiligen Eigenfrequenz des Elastomerresonators 8 bei der zugehörigen Temperatur T1, T2, T3 bzw. T4 korrespondiert.

Weist das Elastomerprodukt 4 beispielsweise eine Temperatur von T3 = 23°C auf, und wird davon ausgegangen, dass der Elastomerresonator 8 ebenfalls diese Temperatur aufweist, so kann das von dem Transceiver 10 erzeugte, elektromagnetische Wechselfeld 16 derart von dem Elastomerresonator 8 verändert sein, dass das veränderte Wechselfeld 16 eine Resonanzfrequenz bei etwa 98,1 MHz aufweist. Hierbei wird davon ausgegangen, dass das von dem Transceiver 10 zunächst erzeugte, elektromagnetische Wechselfeld 16 eine Basisfrequenz von etwa 100 MHz mit einer Bandbreite von plus/minus 10 MHz aufweist. Daraus resultiert, dass der Elastomerresonator 8 mit einem elektromagnetischen Wechselfeld 16 wechselwirkt, das eine Frequenzbandbreite von 20 MHz zwischen 90 MHz und 110 MHz hat. Der Transceiver 10 kann dazu eine entsprechend ausgebildete Dipolantenne aufweisen, die zum Aussenden und/oder Empfangen von elektromagnetischen Wellen innerhalb des zuvor genannten Frequenzspektrums ausgebildet ist.

Wie aus der Figur 3 schematisch zu entnehmen ist, kann aufgrund der Mehrzahl der in dem Punktdiagramm dargestellten Messpunkten eine Funktionsgerade 24 abgeleitet werden, die einen funktionalen Zusammenhang zwischen der Temperatur des Elastomerresonators 8 und der Resonanzfrequenz (fr) bzw. Eigenfrequenz des Elastomerresonators 8 repräsentiert. Die Funktionsgerade 24 kann durch eine Wertetabelle und/oder durch eine Auswertefunktion von der Auswerteeinheit 12 gespeichert sein. Somit kann die Funktionsgerade 24 (bzw. die Tabelle und/oder die Auswertefunktion) von der Auswerteeinheit 12 verwendet werden, um die Temperatur des Elastomerprodukts 4 basierend auf dem Messsignal, das insbesondere auch die Resonanzfrequenz des von dem Messsignal repräsentierten, erfassten Wechselfelds wiedergibt, ermittelt werden.

Wie bereits erläutert, ist es bevorzugt vorgesehen, dass das erste Elastomermaterial 6 als ein Gummimaterial, nämlich als das erste Gummimaterial, ausgebildet ist. In das erste Elastomermaterial 6 können zusätzlich zu dem Elastomerresonator 8 auch weitere Elemente eingebettet sein, wie beispielsweise Festigkeitsträger und/oder andere Funktionselemente. Es ist jedoch besonders bevorzugt vorgesehen, dass der Elastomerresonator 8 ausschließlich in unmittelbarem Kontakt zu dem ersten Elastomermaterial 6 ist. Dadurch kann gewährleistet werden, dass der erste Elastomerresonator 8 beabstandet und/oder kontaktfrei zu weiteren Elementen angeordnet ist, die ggf. in das erste Elastomermaterial 6 des Elastomerprodukts 4 eingebettet sind. Dadurch kann besonders gut gewährleistet werden, dass die Temperatur des Elastomerresonators 8 auch der Temperatur des ersten Elastomermaterials 6 des Elastomerprodukts 4 entspricht. Dies ist insbesondere vor dem Hintergrund von Vorteil, da bei einem Elastomerprodukt oftmals das erste Elastomermaterial einer hohen Temperaturbelastung ausgesetzt ist, die für das erste Elastomermaterial 6 zu einer Herabsetzung der Lebensdauer des Elastomerprodukts 4 führen kann, wenn die Temperatur des ersten Elastomermaterials 6 zu hoch ist. Hingegen ist es nicht selten der Fall, dass Festigkeitsträger und/oder andere Elemente, die in das erste Elastomermaterial 6 eingebettet sind, höheren Temperaturen standhalten können. Deshalb ist es besonders vorteilhaft, die Kerntemperatur des ersten Elastomermaterials 6 zu erfassen. Dies wird durch den zuvor erläuterten Aufbau des Systems berührungsfrei und zugleich besonders präzise ermöglicht.

Um den Einfluss der Temperatur des Elastomerresonators 8 auf die Wechselwirkung mit dem Wechselfeld 16 besonders stark auszuprägen, hat es sich als vorteilhaft herausgestellt, wenn die Leitfähigkeit des zweiten, elektrisch leitfähigen Elastomermaterials 6 des Elastomerresonators 8 besonders groß ist. Dadurch kann eine Temperatur des Elastomerresonators 8 und somit des Elastomerprodukts 4 mittels des Systems 2 besonders präzise bestimmt werden. Als vorteilhaft hat es sich herausgestellt, wenn das zweite, elektrisch leitfähige Elastomermaterial des Elastomerresonators 8 aus einem elektrisch leitfähigen Gummimaterial besteht. Darüber hinaus ist es von Vorteil, wenn der Elastomerresonator 8 außer dem zweiten Elastomermaterial keine weiteren Teile, insbesondere keine aktiven Bauelemente, aufweist. So kann der Elastomerresonator 8 beispielsweise rein passiv und ausschließlich durch das zweite Elastomermaterial ausgebildet sein.

In der Figur 2 ist eine weitere, vorteilhafte Ausgestaltung des Systems 2 schematisch dargestellt. Das System 2 entspricht dabei zumindest im Wesentlichen dem System 2, wie es im Zusammenhang mit der Figur 1 bereits erläutert worden ist. Auf entsprechende, vorteilhafte Erläuterungen, bevorzugte Merkmale, Effekte und/oder Vorteile wird deshalb für das System 2 aus der Figur 2 in analoger Weise Bezug genommen.

Bei dem System 2 aus der Figur 2 ist es allerdings vorgesehen, dass auf einer Außenseite 20 des Elastomerprodukts 4 ein Metallresonator 18 angeordnet ist. Der Metallresonator 18 kann beispielsweise von einer Antenne, insbesondere einer Dipolantenne, gebildet sind. Der Metallresonator 18 ist ein Resonator, der aus Metall besteht. Deshalb wird dieser Resonator auch als Metallresonator bezeichnet. Der Metallresonator 18 ist kontaktfrei und zu dem Elastomerresonator 8 angeordnet. So kann der Elastomerresonator 8 beispielsweise mittig in dem Elastomerprodukt 4 angeordnet sein, wohingegen der Metallresonator 18 an der Außenseite 20 des Elastomerprodukts 4 angeordnet ist. Der Metallresonator 18 ist zur Einkopplung in das Wechselfeld 16 ausgebildet, das von dem Transceiver 10 erzeugbar ist. Der Metallresonator 18 kann deshalb auch in Wechselwirkung mit dem Wechselfeld 16 sein. So kann der Metallresonator 18 beispielsweise zur Übertragung des Wechselfelds 16 derart ausgebildet sein, so dass das Wechselfeld 16 mittels des Metallresonators 18 gebündelt und/oder in Richtung des Elastomerresonators 8 gerichtet wird. Dadurch kann besonders effektiv gewährleistet werden, dass das von dem Transceiver 10 erzeugte Wechselfeld 16 auch bis zu dem Elastomerresonator 8 vordringt und mit diesem in Wechselwirkung kommt.

Schließlich sei darauf hingewiesen, dass das Elastomerprodukt 4 beispielsweise als ein Fahrzeugreifen, eine Luftfeder, ein Gummilager, ein Förderband, ein Riemen oder als ein Schlauch ausgebildet sein kann. So kann das Elastomerprodukt beispielsweise als Elastomerreifen oder als Gummireifen bezeichnet sein. Für die anderen, bevorzugten Ausgestaltungen des Elastomerprodukts können entsprechende Bezeichnungen berücksichtigt werden.

Ist das Elastomerprodukt 4 beispielsweise als ein Reifen ausgestaltet, so können der Transceiver 10 und die Auswerteeinheit 12 sowie die Signalleitung 14 einem Fahrzeugaufbau eines Kraftfahrzeugs zugeordnet sein. Der Elastomerresonator 8 kann in einem der Gummilagen des Fahrzeugreifens eingebettet sein. So kann der Elastomerresonator 8 beispielsweise in eine aus Gummimaterial gebildete Seitenwand des Fahrzeugreifens eingebettet sein. Durch die Rotation des Fahrzeugreifens gibt es bei jedem Umlauf des Fahrzeugreifens zumindest eine Position, an der der Elastomerresonator 8 gegenüberliegend zu dem Transceiver 10 angeordnet ist. In diesem Fall ist die Veränderung des von dem Transceiver 10 erzeugten Wechselfelds 16 am größten. Die Auswerteeinheit 12 kann zur Erfassung der größten Veränderung des Wechselfelds 16 ausgebildet sein, und das zu dem entsprechenden Moment erfasste Wechselfeld 16 für die Ermittlung der Temperatur des als Fahrzeugreifen ausgebildeten Elastomerprodukts 4 verwenden.

Die Auswerteeinheit 12 des Systems 2 kann außerdem eine Signalschnittstelle 22 aufweisen. Die Signalschnittstelle 22 der Auswerteeinheit 12 dient zur Übertragung eines Temperatursignals. Das Temperatursignal kann von der Auswerteeinheit 12 erzeugt werden, wobei das Temperatursignal die von der Auswerteeinheit 12 ermittelte Temperatur des Elastomerprodukts 4, insbesondere des Fahrzeugreifens, repräsentiert. Mittels der Signalschnittstelle 22 kann das Temperatursignal zu einer weiteren Einheit, insbesondere einer weiteren Einheit des Fahrzeugs, übertragen werden. Hier kann das Temperatursignal weiter ausgewertet werden.

### Bezugszeichenliste

- d: Abstand
- h: Höhe
- k: Länge des Elastomerresonators
- L: Längsrichtung
- Q: Höhenrichtung
- T: Temperatur
- fr: Resonanzfrequenz
- 2: System
- 4: Elastomerprodukt
- 6: erste Elastomermaterial
- 8: Elastomerresonator
- 10: Transceiver
- 12: Auswerteeinheit
- 14: Signalleitung
- 16: Wechselfeld
- 18: Metallresonator
- 20: Außenseite
- 22: Signalschnittstelle
- 24: Funktionsgerade

## Patentansprüche

1. System (2) zur Ermittlung einer Temperatur eines Elastomerprodukts (4), wobei das System (2) aufweist:
ein Elastomerprodukt (4) mit einem ersten Elastomermaterial (6) und einem in das erste Elastomermaterial (6) eingebetteten Elastomerresonator (8),
einen Transceiver (10), und
eine Auswerteeinheit (12), die mit dem Transceiver (10) gekoppelt ist,
wobei der Transceiver (10) zur Erzeugung eines elektromagnetischen Wechselfelds (16) ausgebildet ist,
wobei der Elastomerresonator (8) ausgebildet ist, in das Wechselfeld (16) eingekoppelt zu werden, so dass der Elastomerresonator (8) mit dem Wechselfeld (16) in Wechselwirkung ist,
wobei der Elastomerresonator (8) ausgebildet ist, eine Veränderung des Wechselfelds (16) in Abhängigkeit einer Temperatur T des Elastomerresonators (8) zu bewirken,
wobei der Transceiver (10) zur Erfassung des Wechselfelds (16) und zur Erzeugung eines Messsignals ausgebildet ist, das das Wechselfeld (16) und/oder die Veränderung des Wechselfelds (16) repräsentiert, und
wobei die Auswerteeinheit (12) zur Ermittlung der Temperatur des Elastomerprodukts (4) basierend auf dem Messsignal ausgebildet ist,
**dadurch gekennzeichnet, dass**
der Elastomerresonator (8) von einem Streifen aus einem zweiten, elektrisch leitfähigen Elastomermaterial ausgebildet ist.

2. System (2) nach dem vorhergehenden Anspruch, **dadurch gekennzeichnet, dass** der Elastomerresonator (8) zumindest im Wesentlichen mittig im ersten Elastomermaterial (6) angeordnet ist.

3. System (2) nach einem der vorhergehenden Ansprüche, **dadurch gekennzeichnet, dass** von der Auswerteeinheit (12) eine Referenzfrequenz gespeichert ist, wobei die Auswerteeinheit (12) ausgebildet ist, eine Resonanzfrequenz (f1, f2, f3, f4) des Wechselfelds (16) basierend auf dem Messsignal zu ermitteln, und wobei die Auswerteeinheit (12) ausgebildet ist, die Temperatur des Elastomerprodukts (4) basierend oder außerdem basierend auf der Referenzfrequenz und der Resonanzfrequenz (f1, f2, f3, f4) zu ermitteln.

4. System (2) nach einem der vorhergehenden Ansprüche, **dadurch gekennzeichnet, dass** von der Auswerteeinheit (12) Referenzdaten gespeichert sind, die ein Referenzwechselfeld repräsentieren, und wobei die Auswerteeinheit (12) ausgebildet ist, eine Dämpfung des Wechselfelds (16) in Bezug auf das Referenzwechselfeld basierend auf dem Messsignal und den Referenzdaten zu ermitteln, und wobei die Auswerteeinheit (12) ausgebildet ist, die Temperatur des Elastomerprodukts (4) basierend oder außerdem basierend auf der Dämpfung zu ermitteln.

5. System (2) nach einem der vorhergehenden Ansprüche, **dadurch gekennzeichnet, dass** die Auswerteeinheit (12) zur Ermittlung einer Frequenzbandbreite des Wechselfelds (16) basierend auf dem Messsignal ausgebildet ist, und wobei die Auswerteeinheit (12) ausgebildet ist, die Temperatur des Elastomerprodukts (4) basierend oder außerdem basierend auf der Frequenzbandbreite des Wechselfelds (16) zu ermitteln.

6. System (2) nach dem vorhergehenden Anspruch, **dadurch gekennzeichnet, dass** das erste Elastomermaterial (6) elektrisch isolierend ausgebildet ist.

7. System (2) nach dem vorhergehenden Anspruch, **dadurch gekennzeichnet, dass** das erste Elastomermaterial (6) als ein erstes Gummimaterial ausgebildet ist.

8. System (2) nach dem vorhergehenden Anspruch, **dadurch gekennzeichnet, dass** das zweite Elastomermaterial als ein elektrisch leitfähiges Gummimaterial ausgebildet ist.

9. System (2) nach einem der vorhergehenden Ansprüche, **dadurch gekennzeichnet, dass** der Elastomerresonator (8) rein passiv ausgebildet ist.

10. System (2) nach einem der vorhergehenden Ansprüche, **gekennzeichnet durch** einen Metallresonator (18), der an einer Außenseite (20) des Elastomerprodukts (4) angeordnet ist, so dass der Metallresonator (18) und der Elastomerresonator (8) kontaktfrei zueinander angeordnet ist, wobei der Metallresonator (18) zur Einkopplung in das Wechselfeld (16) und zur Übertragung des Wechselfelds (16) zu dem Elastomerresonator (8) ausgebildet ist.

11. System (2) nach einem der vorhergehenden Ansprüche, **gekennzeichnet durch** eine mit der Auswerteeinheit (12) gekoppelte Signalschnittstelle zur Übertragung eines Temperatursignals, das die von der Auswerteeinheit (12) ermittelbare Temperatur des Elastomerprodukts (4) repräsentiert.

12. System (2) nach einem der vorhergehenden Ansprüche, **dadurch gekennzeichnet, dass** das Elastomerprodukt (4) ein Reifen, eine Luftfeder, ein Gummilager, ein Förderband, ein Riemen oder ein Schlauch ist.

## Claims

1. System (2) for determining a temperature of an elastomer product (4), wherein the system (2) comprises:
an elastomer product (4) with a first elastomer material (6) and an elastomer resonator (8) embedded in the first elastomer material (6),
a transceiver (10), and
an evaluation unit (12), which is coupled to the transceiver (10),
wherein the transceiver (10) is designed for generating an electromagnetic alternating field (16), wherein the elastomer resonator (8) is designed to be coupled into the alternating field (16), so that the elastomer resonator (8) interacts with the alternating field (16),
wherein the elastomer resonator (8) is designed to bring about a change in the alternating field (16) in dependence on a temperature T of the elastomer resonator (8),
wherein the transceiver (10) is designed for sensing the alternating field (16) and for generating a measuring signal that represents the alternating field (16) and/or the change in the alternating field (16), and
wherein the evaluation unit (12) is designed for determining the temperature of the elastomer product (4) on the basis of the measuring signal, **characterized in that**
the elastomer resonator (8) is formed by a strip of a second, electrically conductive elastomer material.

2. System (2) according to the preceding claim, **characterized in that** the elastomer resonator (8) is arranged at least substantially centrally in the first elastomer material (6).

3. System (2) according to one of the preceding claims, **characterized in that** a reference frequency is stored by the evaluation unit (12), wherein the evaluation unit (12) is designed to determine a resonant frequency (f1, f2, f3, f4) of the alternating field (16) on the basis of the measuring signal, and wherein the evaluation unit (12) is designed to determine the temperature of the elastomer product (4) on the basis or also on the basis of the reference frequency and the resonant frequency (f1, f2, f3, f4).

4. System (2) according to one of the preceding claims, **characterized in that** reference data that represent a reference alternating field are stored by the evaluation unit (12), and wherein the evaluation unit (12) is designed to determine a damping of the alternating field (16) with respect to the reference alternating field on the basis of the measuring signal and the reference data, and wherein the evaluation unit (12) is designed to determine the temperature of the elastomer product (4) on the basis or also on the basis of the damping.

5. System (2) according to one of the preceding claims, **characterized in that** the evaluation unit (12) is designed for determining a frequency bandwidth of the alternating field (16) on the basis of the measuring signal, and wherein the evaluation unit (12) is designed to determine the temperature of the elastomer product (4) on the basis or also on the basis of the frequency bandwidth of the alternating field (16).

6. System (2) according to the preceding claim, **characterized in that** the first elastomer material (6) is formed as electrically insulating.

7. System (2) according to the preceding claim, **characterized in that** the first elastomer material (6) is formed as a first rubber material.

8. System (2) according to the preceding claim, **characterized in that** the second elastomer material is formed as an electrically conductive rubber material.

9. System (2) according to one of the preceding claims, **characterized in that** the elastomer resonator (8) is formed as purely passive.

10. System (2) according to one of the preceding claims, **characterized by** a metal resonator (18), which is arranged on an outer side (20) of the elastomer product (4), so that the metal resonator (18) and the elastomer resonator (8) are arranged contact-free in relation to one another, wherein the metal resonator (18) is designed for coupling into the alternating field (16) and for transmitting the alternating field (16) to the elastomer resonator (8).

11. System (2) according to one of the preceding claims, **characterized by** a signal interface, coupled to the evaluation unit (12), for transmitting a temperature signal that represents the temperature of the elastomer product (4) determinable by the evaluation unit (12).

12. System (2) according to one of the preceding claims, **characterized in that** the elastomer product (4) is a tyre, an air spring, a rubber bearing, a conveyor, a belt or a hose.

## Revendications

1. Système (2) de détermination d'une température d'un produit élastomère (4), le système (2) comportant :
un produit élastomère (4) comprenant un premier matériau élastomère (6) et un résonateur élastomère (8) noyé dans le premier matériau élastomère (6),
un émetteur-récepteur (10), et
une unité d'évaluation (12) qui est couplée à l'émetteur-récepteur (10),
l'émetteur-récepteur (10) étant conçu pour générer un champ électromagnétique alternatif (16),
le résonateur élastomère (8) étant conçu pour être introduit par couplage dans le champ alternatif (16) de sorte que le résonateur élastomère (8) interagisse avec le champ alternatif (16),
le résonateur élastomère (8) étant conçu pour générer une variation du champ alternatif (16) en fonction d'une température T du résonateur élastomère (8),
l'émetteur-récepteur (10) étant conçu pour détecter le champ alternatif (16) et pour générer un signal de mesure qui représente le champ alternatif (16) et/ou la variation du champ alternatif (16), et
l'unité d'évaluation (12) étant conçue pour déterminer la température du produit élastomère (4) sur la base du signal de mesure,
**caractérisé en ce que**
le résonateur élastomère (8) est formé d'une bande d'un deuxième matériau élastomère électriquement conducteur.

2. Système (2) selon la revendication précédente, **caractérisé en ce que** le résonateur élastomère (8) est disposé au moins sensiblement au centre dans le premier matériau élastomère (6).

3. Système (2) selon l'une des revendications précédentes, **caractérisé en ce qu'**une fréquence de référence est mémorisée par l'unité d'évaluation (12), l'unité d'évaluation (12) étant conçue pour déterminer une fréquence de résonance (f1, f2, f3 , f4) du champ alternatif (16) en fonction du signal de mesure, et l'unité d'évaluation (12) étant conçue pour déterminer la température du produit élastomère (4) en fonction ou également en fonction de la fréquence de référence et de la fréquence de résonance (f1, f2, f3, f4).

4. Système (2) selon l'une des revendications précédentes, **caractérisé en ce que** l'unité d'évaluation (12) mémorise des données de référence représentant un champ alternatif de référence, et l'unité d'évaluation (12) étant conçue pour déterminer un amortissement du champ alternatif (16) en relation avec le champ alternatif de référence sur la base du signal de mesure et des données de référence, et l'unité d'évaluation (12) étant conçue pour déterminer la température du produit élastomère (4) sur la base ou également sur la base de l'amortissement.

5. Système (2) selon l'une des revendications précédentes, **caractérisé en ce que** l'unité d'évaluation (12) est conçue pour déterminer une bande passante fréquentielle du champ alternatif (16) sur la base du signal de mesure, et l'unité d'évaluation (12) étant conçue pour déterminer la température du produit élastomère (4) sur la base ou également sur la base de la bande passante fréquentielle du champ alternatif (16) .

6. Système (2) selon la revendication précédente, **caractérisé en ce que** le premier matériau élastomère (6) est conçu pour être électriquement isolant.

7. Système (2) selon la revendication précédente, **caractérisé en ce que** le premier matériau élastomère (6) est conçu comme un premier matériau caoutchouteux.

8. Système (2) selon la revendication précédente, **caractérisé en ce que** le deuxième matériau élastomère est conçu comme un matériau caoutchouteux électriquement conducteur.

9. Système (2) selon l'une des revendications précédentes, **caractérisé en ce que** le résonateur élastomère (8) est purement passif.

10. Système (2) selon l'une des revendications précédentes, **caractérisé par** un résonateur métallique (18) qui est disposé sur une face extérieure (20) du produit élastomère (4) de sorte que le résonateur métallique (18) et les résonateurs élastomères (8) sont sans contact entre eux, le résonateur métallique (18) étant conçu pour être introduit par couplage dans le champ alternatif (16) et pour transmettre le champ alternatif (16) au résonateur élastomère (8).

11. Système (2) selon l'une des revendications précédentes, **caractérisé par** une interface de signal couplée à l'unité d'évaluation (12) et destinée à transmettre un signal de température qui représente la température du produit élastomère (4) qui peut être déterminée par l'unité d'évaluation (12).

12. Système (2) selon l'une des revendications précédentes, **caractérisé en ce que** le produit élastomère (4) est un pneumatique, un ressort pneumatique, un coussinet en caoutchouc, une bande transporteuse, une courroie ou un tuyau.
